# EUROPÄISCHE PATENTANMELDUNG

(11) **EP 4 036 621 A1**
(43) Veröffentlichungstag der Anmeldung: **03.08.2022**
(21) Anmeldenummer: 21154622.1
(22) Anmeldetag: 01.02.2021
(51) Int. Cl.: G02B 6/44, H02G 1/08

(54) **VERFAHREN ZUM EINFÜHREN WENIGSTENS EINES KABELS IN EIN ROHR**

(71) Anmelder: Dipl.-Ing. Dr. Ernst Vogelsang GmbH & Co. KG, D-45699 Herten (DE)
(72) Erfinder: Vogelsang, Horst, 45699 Herten (DE)
(74) Vertreter: Andrejewski - Honke Patent- und Rechtsanwälte Partnerschaft mbB

(57) **Zusammenfassung**

Gegenstand der Erfindung sind ein Verfahren und eine Vorrichtung zum Einführen wenigstens eines Kabels (1) in ein Rohr (2). Dabei wird das Kabel (1) mit Hilfe einer Vorschubeinrichtung (4) in eine Einführöffnung (2a) des Rohres (2) eingeschoben und dann entlang des Rohres (2) durch einen seitens einer Einblasvorrichtung (5, 6, 7, 8, 9) im Inneren des Rohres (2) erzeugten Überdruck in Richtung auf ein Rohrende (2b) weitertransportiert. Erfindungsgemäß ist zusätzlich eine Saugeinheit (11) vorgesehen, welche das Innere des Rohres (2) mit einem Unterdruck zur Unterstützung der erzeugten Luftströmung beaufschlagt.

## Beschreibung

Die Erfindung betrifft ein Verfahren zum Einführen wenigstens eines Kabels in ein Rohr, wonach das Kabel mit Hilfe einer Vorschubeinrichtung in eine Einführöffnung des Rohres eingeschoben und dann entlang des Rohres durch einen seitens einer Einblasvorrichtung im Inneren erzeugten Überdruck in Richtung auf ein Rohrende weitertransportiert wird. Ebenfalls ist Gegenstand der Erfindung eine entsprechende Vorrichtung.

Bei dem Kabel kann es sich ganz generell um ein elektrisches Kabel zur Datenübertragung handeln. Regelmäßig kommen an dieser Stelle jedoch Lichtwellenleiterkabel, Glasfaserkabel oder allgemein faseroptische Kabel oder dergleichen zum Einsatz, die in der Regel zum Ausbau eines Glasfasernetzes in der Erde verlegt werden. Selbstverständlich sind auch Kombinationen denkbar. Dementsprechend handelt es sich bei dem Rohr meistens um ein Kabelschutzrohr, wobei an dieser Stelle auch sogenannte Mikrokabelrohre zum Einsatz kommen. Kabelschutzrohre zur Aufnahme von faseroptischen Kabeln werden bereits seit Jahrzehnten eingesetzt und verlegt, wie beispielsweise die DE 696 14 951 T2 belegt.

Dabei wird im Allgemeinen so vorgegangen, dass das Rohr in einer Baugrube platziert wird und anschließend das eine oder die mehreren Kabel durch Überdruck eingeschossen werden. Dabei kann insgesamt so vorgegangen werden, wie dies in der DE 198 15 596 A1 generell beschrieben wird, die sich mit einem Verfahren und einer Vorrichtung zum Kabeleinblasen in Schutzrohre beschäftigt. An dieser Stelle besteht die Möglichkeit, den Luftdurchfluss durch das Schutzrohr zu ändern. Zu diesem Zweck ist am Ende des Schutzrohres eine Regulationsarmatur mit verstellbarer Öffnung vorgesehen. Mit Hilfe der Regulationsarmatur kann der Luftdurchfluss durch das Schutzrohr geändert werden.

Bei einer vergleichbaren und gattungsbildenden Vorgehensweise entsprechend der DE 10 2019 113 923 A1 wird so vorgegangen, dass das Kabel in Richtung der Einführöffnung mit Hilfe einer Vorschubeinrichtung mit Antriebsmotor vorgeschoben wird. Zusätzlich wird Luft in die Einführöffnung mit Hilfe einer Luftbeaufschlagungseinrichtung eingeblasen. Eine Steuerungseinrichtung sorgt dafür, dass die Vorschubeinrichtung bzw. die Luftbeaufschlagungseinrichtung angesteuert werden können, und zwar derart, dass zwischen der Vorschubeinrichtung und der Luftbeaufschlagungseinrichtung ein Reserveabschnitt des Kabels bereitsteht. Dieser Reserveabschnitt soll größer als eine Minimallänge des Kabels zwischen der Vorschubeinrichtung und der Luftbeaufschlagungseinrichtung ausgebildet sein und verkürzt werden können, wenn das Kabel eine höhere Laufgeschwindigkeit eingangs der Luftbeaufschlagungseinrichtung als ausgangs der Vorschubeinrichtung aufweist. Dadurch soll insgesamt eine verbesserte Kabeleinführvorrichtung zur Verfügung gestellt werden.

Schließlich beschäftigt sich der weitere Stand der Technik nach der DE 20 2015 004 691 U1 mit einer Vorrichtung zur Verwendung beim Einblasen von Kabeln und insbesondere Lichtwellenleitern in ein Rohr. Dazu sind ein Vortriebsmechanismus, eine Luftschleuse an einem Rohrende des Rohres und ein Luftstromerzeugungsmittel realisiert. Die Vorrichtung ist insgesamt als Mess- und Protokolliereinrichtung ausgebildet, so dass wenigstens ein Prozessparameter automatisch erfasst werden kann. Dadurch soll insgesamt die Zuverlässigkeit der Funktionsweise einer solchen Vorrichtung verbessert werden.

Der Stand der Technik hat sich grundsätzlich bewährt, was das Einblasen von Kabeln in Rohre bzw. Schutzrohre angeht. In der Praxis erfolgt diese Vorgehensweise an der Baustelle bzw. bei in der Baugrube befindlichem Rohr respektive Kabelschutzrohr. Bekanntermaßen herrschen in beziehungsweise an einer solchen Baugrube oder allgemein im Bereich einer Baustelle raue Umweltbedingungen, die durch Regen, Schmutz etc. gekennzeichnet sind und das Einblasen des Kabels in das Rohr erschweren können.

Ein weiterer und besonders gravierender Nachteil ist jedoch darin zu sehen, dass das Einblasen des Kabels in das Rohr bzw. die an dieser Stelle erforderliche Einblasvorrichtung betrieben werden muss. Typischerweise greift die Einblasvorrichtung auf einen Kompressor zurück, um die nötigen Luftströme und den erforderlichen Überdruck erzeugen zu können. Das setzt oftmals eine belastbare elektrische Energieversorgung an der Baustelle bzw. im Bereich der Baugrube voraus. Eine derartige Energieversorgung lässt sich oftmals nur unter erheblichem Aufwand realisieren und darstellen. Außerdem muss fachkundiges Personal vorhanden sein, um etwaige Beschädigungen des Kabels beim Einblasen in das Rohr zu vermeiden bzw. überhaupt den Vorgang erfolgreich darstellen zu können. Hier setzt die Erfindung an.

Der Erfindung liegt das technische Problem zugrunde, ein derartiges Verfahren so weiterzuentwickeln, dass die Bestückung des Rohres und insbesondere Kabelschutzrohres mit einem oder mehreren Kabeln insgesamt erleichtert ist und mit der Bestückung in einer Baugrube vorhandene Nachteile vermieden werden.

Zur Lösung dieser technischen Problemstellung ist ein gattungsgemäßes Verfahren zum Einführen wenigstens eines Kabels in ein Rohr im Rahmen der Erfindung dadurch gekennzeichnet, dass zusätzlich eine Saugeinheit vorgesehen ist, welche das Innere des Rohres mit einem Unterdruck zur Unterstützung der erzeugten Luftströmung beaufschlagt, so dass die Bestückung des Rohres mit dem Kabel auch in von der Längserstreckung abweichendem Zustand erfolgen kann.

Erfindungsgemäß erfolgt die Bestückung des Rohres bzw. Kabelschutzrohres mit dem einen Kabel bzw. Lichtwellenleiterkabel oder faseroptischen Kabel also zunächst einmal und vergleichbar dem Stand der Technik derart, dass nach Einschieben des Kabels in die Einführöffnung des Rohres der Weitertransport des Kabels im Inneren des Rohres durch einen mit Hilfe der Einblasvorrichtung im Inneren des Rohres erzeugten Überdruck an Luft bewerkstelligt wird. Dadurch sorgt die Einblasvorrichtung unverändert dafür, dass im Rohr ausgehend von der Einführöffnung bis hin zum Rohrende eine Luftströmung erzeugt wird, die dafür sorgt, dass das Kabel in der besagten Längsrichtung von der Einführöffnung bis zum Rohrende transportiert wird. Diesen Transport mögen dabei im Bereich der Einführöffnung auf das Kabel zusätzlich aufgebrachte Gleit- oder Schmiermittel unterstützen. Ebenso wirken in diesem Zusammenhang etwaige am Innenumfang des Kabels vorhandene Rippen reibungsmindernd.

Dabei ist die Einblasvorrichtung im Allgemeinen im Bereich der Einführöffnung vorgesehen und realisiert, sorgt also dafür, dass das Innere des Rohres ausgehend vom Bereich der Einführöffnung mit dem seitens der Einblasvorrichtung erzeugten Überdruck beaufschlagt wird. Dieser Überdruck sorgt nun für die entlang des Rohres beobachtete Luftströmung und die auf diese Weise eingestellte Vorschubgeschwindigkeit des Kabels im Inneren des Rohres.

Erfindungsgemäß wird dieser Vorgang nun noch dadurch unterstützt, dass die bereits angesprochene Saugeinheit typischerweise im Bereich des Rohrendes an das Rohr angeschlossen ist. Da das Kabel bei seiner Wanderung durch das Rohr eine Luftsäule vor sich herschiebt, führt diese Luftsäule in Verbindung mit den spezifischen Reibungsverhältnissen des Kabels an der Innenwand des Rohres insgesamt dazu, dass insbesondere bei großen Rohrlängen von mehreren 100 m oder mehr als 1000 m das Kabel einen erheblichen Widerstand überwinden muss. Die Erfindung sorgt nun dafür, dass mit Hilfe der im Bereich des Rohrendes an das Rohr angeschlossenen Saugeinheit im Endeffekt die von dem Kabel beim Transport durch das Rohr vor sich hergeschobene Luftsäule abgezogen wird. Dadurch sinkt insgesamt der vom Kabel bei seiner Wanderung durch das Rohr zu überwindende Widerstand.

In diesem Zusammenhang versteht es sich, dass die Einblasvorrichtung im Allgemeinen einen Überdruck an Luft in Bezug auf den Normaldruck der Luft erzeugt, also einen Druck mit mehr als 1 bar. Meistens wird hier mit Überdrücken gearbeitet, die bis zu 10 bar und mehr betragen. Demgegenüber sorgt die Saugeinheit dafür, dass im Bereich des Rohrendes mit ihrer Hilfe ein Unterdruck erzeugt wird, also ein Druck, der unterhalb des Normaldruckes der Luft angesiedelt ist. Tatsächlich kann die Saugeinheit einen Unterdruck im Millibar-Bereich erzeugen, beispielsweise 1 mbar bis 100 mbar. Außerdem wird man die Auslegung jeweils so treffen, dass die jeweilige Luftfördermenge von einerseits der Einblasvorrichtung und andererseits der Saugeinheit aneinander angepasst sind.

Beispielsweise kann die Luftfördermenge im Minimum 5 bis 10m³/min oder noch deutlich mehr betragen. Sofern die Luftfördermenge von einerseits der Einblasvorrichtung und andererseits der Unterdruckeinrichtung aneinander angepasst sind bzw. sich größtenteils entsprechen, ist jedenfalls sichergestellt, dass durch das Rohr bzw. Kabelschutzrohr ein gleichmäßiger Luftstrom beobachtet wird, und zwar ohne dass die Gefahr besteht, dass sich frontseitig des hindurchgezogenen Kabels eine etwaige Luftsäule einstellt, die von dem Kabel durch das Rohr geschoben werden muss und dadurch seinen Transport behindert.

Aufgrund dieses reibungsoptimierten Transportes des Kabels durch das Rohr eröffnet die Erfindung die Möglichkeit, dass die Bestückung des Rohres mit dem Kabel auch in dem von der Längserstreckung abweichenden Zustand erfolgen kann. Das heißt, die Bestückung des Rohres kann grundsätzlich erfindungsgemäß auch in längserstrecktem Zustand sowie in der Baugruppe durchgeführt und vorgenommen werden. Im Regelfall eröffnet der reibungsoptimierte Transport des Kabels durch das Rohr durch gleichsam den Wegfall der vom Kabel durch das Rohr vor sich hergeschobenen Luftsäule die weitergehende Möglichkeit, das Rohr in einem von der Längserstreckung abweichenden Zustand bestücken zu können. Ein solcher von der Längserstreckung abweichender Zustand stellt sich beispielsweise dann ein, wenn das Rohr nicht nur längserstreckt, sondern zumindest teilweise auch bogenförmig ausgerichtet wird. Generell kann das Rohr aber auch gänzlich bei der Bestückung bogenförmig verlaufen. Dadurch besteht die Möglichkeit, das Rohr mit dem Kabel bzw. den mehreren Kabeln beispielsweise in einer Fabrikhalle oder am Ort der Rohrherstellung bestücken zu können. Denn ein bogenförmiger Verlauf des Rohres bei der Bestückung mit dem Kabel führt zu einer erhöhten Reibung des Kabels an der Innenwand des Rohres im Vergleich zu der Situation, bei welcher das Kabel in ein längserstrecktes Rohr eingeblasen wird.

Eine solche erhöhte Reibung durch einen bogenförmigen Verlauf des Rohres bei der Bestückung mit dem Kabel wird nun erfindungsgemäß dadurch kompensiert, dass durch die zusätzlich vorgesehene Saugeinheit insbesondere die vom Kabel ansonsten vor sich hergeschobene Luftsäule entfällt und damit zumindest in diesem Aspekt die Reibung verringert ist. Jedenfalls sorgt das Zusammenspiel zwischen Einblasvorrichtung einerseits und zusätzlich vorgesehener Saugeinheit andererseits dafür, dass auch topologisch ansonsten schwierig mit dem Kabel zu bestückende geometrische Anordnungen des Rohres wie beispielsweise Schlaufen oder wickelförmige Anordnungen des Rohres, nunmehr und erfindungsgemäß beherrscht werden können. Dadurch lässt sich ein solcher Rohrwickel unschwer auch in einer Fabrikationshalle oder allgemein in einem geschützten Raum mit dem Kabel beschicken.

Das hat den besonderen Vorteil, dass in einer solchen Fabrikationshalle zunächst einmal im Vergleich zu einer Baugrube deutlich günstigere Umweltbedingungen beobachtet werden, weil in der Regel Regen, Staub oder sonstiger Schmutz einer Baustelle nicht vorhanden sind. Hinzu kommt als weiterer Vorteil, dass bei einer solchen Bestückung in einer Halle oder allgemein einem Gebäude die erforderliche Infrastruktur vorhanden ist, insbesondere was die beispielsweise elektrische Energieversorgung sowohl der Einblasvorrichtung als auch der Saugeinheit angeht. Schließlich ist diese Vorgehensweise mit dem weiteren Vorteil verbunden, dass typischerweise in der Fabrikhalle Fachpersonal zur Verfügung steht, um den Bestückungsvorgang zu steuern und zu überwachen. Ein bisher erforderlicher Transport beispielsweise der Einblasvorrichtung ebenso wie des Fachpersonals zur Baustelle ist also im Rahmen der Erfindung ausdrücklich entbehrlich.

Hinzu kommt als weiterer Vorteil, dass in der Fabrikhalle im Beispielfall unmittelbar das erforderliche Rohr zur Aufnahme des einen oder der mehreren Kabel produziert werden kann. Dabei lässt sich das Rohr mit einer praktisch beliebigen Länge herstellen, die exakt an die Anforderungen am Verlegeort angepasst sein mag. Dieses vorkonfektioniertes Rohr wird anschließend mit dem in der betreffenden Fabrikhalle zur Verfügung gestellten und hierzu passenden Kabel bestückt und folglich endkonfektioniert. Anschließend wird das endkonfektionierte Rohr beziehungsweise Kabelschutzrohr inklusive eingezogenem Kabel zielgenau an den entsprechenden Einbauort geliefert. Dadurch wird nicht nur die Funktionssicherheit erhöht, sondern lassen sich Kosten in erheblichem Umfang sparen. Außerdem ist die Gefahr von Fehlfertigungen auf ein Minimum reduziert, weil das Rohr und das Kabel an den spezifischen Einbauort angepasst werden können. Hierin sind die wesentlichen Vorteile zu sehen.

Es hat sich bewährt, wenn die Saugeinheit und die Einblasvorrichtung hinsichtlich ihrer jeweiligen Luftfördermenge und/oder des erzeugten Druckes jeweils variabel eingestellt werden. Durch diese Variabilität besteht die Möglichkeit, die Luftfördermenge bzw. den erzeugten Druck an die tatsächlichen Erfordernisse anzupassen, beispielsweise den Innendurchmesser des Rohres, seine etwaige Auslegung an der Innenfläche (mit oder ohne Rippen), die im Rohr aufgenommenen Kabel etc.

Tatsächlich kann je nach gewünschter Geschwindigkeit der Luftströmung im Inneren des Rohres die Luftfördermenge und/oder der erzeugte Druck der Saugeinheit und/oder der Einblasvorrichtung entsprechend eingestellt und vorgegeben werden. Das mag mit einer Steuereinrichtung erfolgen. Dabei wird man - wie zuvor bereits erläutert - sowohl die Luftfördermenge als auch den Druck von einerseits der Einblasvorrichtung und andererseits der Saugeinheit typischerweise aneinander anpassen, um sicherzustellen, dass sich nicht eine von dem Kabel durch das Rohr hindurchgeschobene Luftsäule einstellt, welche aus den geschilderten Gründen reibungserhöhend wirkt.

Außerdem ist die Auslegung so getroffen, dass die Geschwindigkeit der Luftströmung in Verbindung mit einem Strömungsquerschnitt zwischen Kabel und Rohrinnenwand sowie die Reibung des Kabels an der Rohrinnenwand bzw. der Innenwand des Rohres im Wesentlichen eine Vorschubgeschwindigkeit des Kabels im Rohr vorgeben. Das heißt, die Vorschubgeschwindigkeit des Kabels im Rohr hängt größtenteils von der Geschwindigkeit der Luftströmung in Verbindung mit dem Strömungsquerschnitt zwischen Kabel und Rohrinnenwand ab. Darüber hinaus spielt natürlich auch die Reibung des Kabels an der Rohrinnenwand sowie das Gewicht des Kabels eine Rolle.

Wie bereits erläutert, wird das Rohr bei der Bestückung mit dem Kabel längserstreckt und/oder bogenförmig ausgerichtet. Dabei kommt es erfindungsgemäß insbesondere darauf an, dass die Bestückung des Rohres in einem von der Längserstreckung abweichenden Zustand erfolgt bzw. durchgeführt werden kann. Im Allgemeinen ist das Rohr bei der Bestückung mit dem Kabel spiralförmig bzw. wendeiförmig auf einer Trommel aufgewickelt. Dadurch kann die Bestückung des Rohres mit dem Kabel unmittelbar im Anschluss an die Fertigung des Rohres durchgeführt werden, weil das in der Regel extrudierte Rohr nach seiner Herstellung unmittelbar auf einer solchen Trommel aufgewickelt wird. Das folglich auf der Trommel aufgewickelte Rohr kann erfindungsgemäß unmittelbar im Anschluss daran mit dem entsprechend einzuziehenden Kabel oder den mehreren Kabeln ausgerüstet werden.

Gegenstand der Erfindung ist auch eine Vorrichtung, wie sie in den Ansprüchen 8 ff. im Detail beschrieben wird. In jedem Fall eröffnet die Erfindung zum ersten Mal die Möglichkeit, ein vorkonfektioniertes Rohr bzw. Kabelschutzrohr unmittelbar mit dem zugehörigen und einzuziehenden Kabel oder den mehreren Kabeln auszurüsten, und zwar fabrikseitig. Dadurch ist die anschließende Verlegung dieses endkonfektionierten Rohres inklusive eingezogenem Kabel am Verlegeort bzw. der Baustelle erheblich vereinfacht. Hierin sind die wesentlichen Vorteile zu sehen.

Im Folgenden wird die Erfindung anhand einer lediglich ein Ausführungsbeispiel darstellenden Zeichnung näher erläutert;
- Fig. 1: zeigt eine Vorrichtung zum Einführen wenigstens eines Kabels in ein Rohr und
- Fig. 2: zeigt einen Querschnitt durch das Rohr mit eingezogenem Kabel.

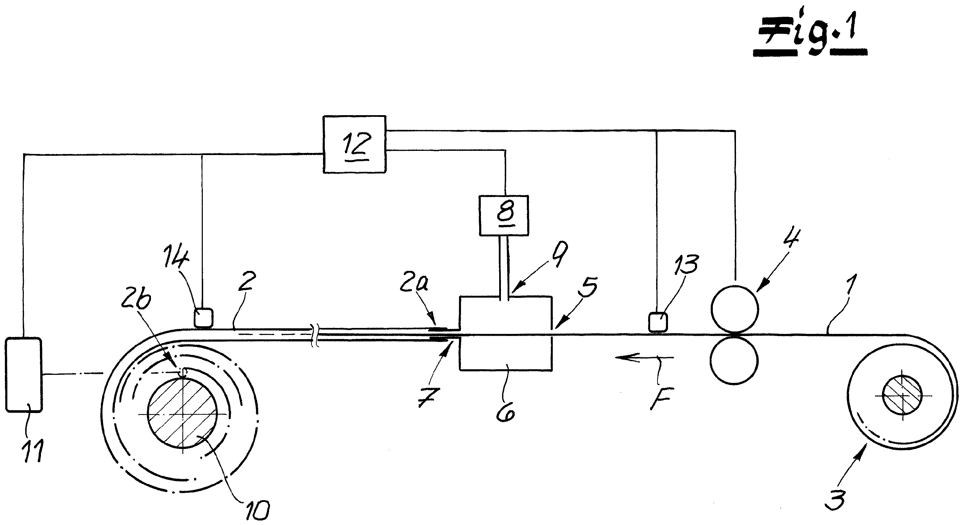

In der Fig. 1 ist eine Vorrichtung dargestellt, mit deren Hilfe ein Kabel 1 in ein Rohr 2 eingeführt werden kann. Zu diesem Zweck wird das Kabel 1 zunächst einmal ausgehend von einer das Kabel 1 aufnehmenden Vorratseinheit 3 zugeführt. Bei der Vorratseinheit 3 für das Kabel 1 kann es sich nicht einschränkend um eine Trommel handeln, auf welcher das Kabel 1 aufgewickelt ist.

Zu diesem Zweck wird das Kabel 1 in der Darstellung nach der Fig. 1 und ausgehend von der Vorratseinheit 3 im rechten Teil der Fig. 1 mit Hilfe einer Vorschubeinrichtung 4 in einer Förderrichtung F von rechts nach links bewegt. Zu diesem Zweck kann die Vorschubeinrichtung 4 - wie dargestellt - mit wenigstens einer Rollenanordnung für das Kabel 1 ausgerüstet sein. Tatsächlich können hier zwei gegenläufige Rollen zum Einsatz kommen, die zwischen sich das Kabel 1 führen und in der Förderrichtung F transportieren.

In der Förderrichtung F schließt sich an die Vorschubeinrichtung 4 für das Kabel 1 eine Einblasvorrichtung 5, 6, 7, 8, 9 an. Die Einblasvorrichtung 5, 6, 7, 8, 9 ist mit einer Einlasseinheit 5, 6 sowie einem Auslassrohr 7 für das Kabel 1 ausgerüstet. Die Einlasseinheit 5, 6 verfügt über einen Lufteinlass 5, über den das mit Hilfe der Vorschubeinrichtung 4 in der Förderrichtung F bewegte Kabel 1 in die Einblasvorrichtung 5, 6, 7, 8, 9 eintritt.

Zusätzlich verfügt die Einblasvorrichtung 5, 6, 7, 8, 9 über einen an die Einlasseinheit 5, 6 angeschlossenen Lufterzeuger 8. Tatsächlich ist der Lufterzeuger 8 über einen Einlass 9 mit dem Inneren der ansonsten kastenförmigen und geschlossenen Einlasseinheit 5, 6 verbunden. Bei dem Lufterzeuger 8 handelt es sich im Beispielfall und nicht einschränkend um einen Kompressor 8.

An die Einblasvorrichtung 5, 6, 7, 8, 9 schließt sich eine Positioniereinrichtung 10 für das Rohr 2 an. Bei der Positioniereinrichtung 10 für das Rohr 2 handelt es sich nach dem Ausführungsbeispiel um eine Wickeltrommel 10, auf welcher das Rohr 2 spiral- oder wendelförmig aufgewickelt ist. Dazu mag das Rohr 2 zuvor in der gewünschten Länge produziert worden sein. Bei dem Rohr 2 handelt es sich im Regelfall um ein solches aus einem thermoplastischen Polymer, insbesondere PE (Polyethylen). Zu diesem Zweck mag zusätzlich eine nicht ausdrücklich dargestellte Extrusionsvorrichtung realisiert sein, mit deren Hilfe zuvor das Rohr 2 in der gewünschten Länge produziert und dann auf der Wickeltrommel 10 aufgewickelt worden ist.

An die Positioniereinrichtung 10 bzw. die Wickeltrommel 10 schließt sich in der Förderrichtung F endseitig eine Saugeinheit 11 an. Die Saugeinheit 11 ist dabei im Bereich des Rohrendes 2b an das Rohr 2 angeschlossen. Demgegenüber beaufschlagt die Einblasvorrichtung 5, 6, 7, 8, 9 das Innere des Rohres 2, und zwar ausgehend vom Bereich einer Einführöffnung 2a des Rohres 2.

Zum grundsätzlichen Aufbau gehört noch eine Steuereinheit bzw. Steuereinrichtung 12, mit deren Hilfe sowohl die Einblasvorrichtung 5, 6, 7, 8, 9 bzw. der dortige Lufterzeuger 8 einerseits und die Saugeinheit 11 andererseits angesteuert werden. Dadurch stellt die Steuereinheit 12 sicher, dass die Saugeinheit 11 und die Einblasvorrichtung 5, 6, 7, 8, 9 hinsichtlich ihrer jeweiligen Luftfördermenge sowie des erzeugten Druckes aneinander angepasst sind. Außerdem kann über die Steuereinheit 12 die fragliche Luftfördermenge bzw. der Druck sowohl der Saugeinheit 11 als auch der Einblasvorrichtung 5, 6, 7, 8, 9 jeweils variabel eingestellt werden. Dadurch lässt sich insgesamt auch die Vorschubgeschwindigkeit des Kabels 1 im Inneren des Rohres 2 vorgeben.

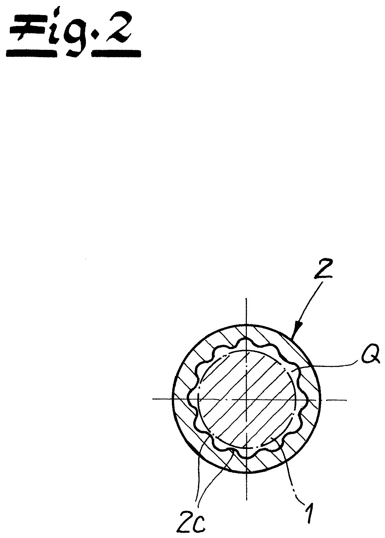

Tatsächlich hängt die Vorschubgeschwindigkeit des Kabels 1 im Rohr 2 unter anderem davon ab, wie groß ein Strömungsquerschnitt Q zwischen dem Kabel 1 und einer Rohrinnenwand bzw. der Innenwand des Rohres 2 ausgebildet ist. Außerdem hängt die Vorschubgeschwindigkeit des Kabels 1 im Rohr 2 von der Reibung des Kabels 1 an der betreffenden Rohrinnenwand ab. Hier können beispielsweise in der Querschnittsdarstellung nach der Fig. 2 angedeutete Rippen 2c vorgesehen werden, welche die Reibung des Kabels 1 gegenüber dem Rohr 2 verringern. Ebenfalls möglich ist es, dass das Kabel 1 im Bereich der Vorschubeinrichtung 4 mit einem Gleitmittel benetzt wird, um an dieser Stelle die Reibung zu verringern.

Die Steuereinheit 12 ist darüber hinaus mit einem oder mehreren Sensoren 13, 14 gekoppelt. Tatsächlich ist zunächst einmal ein Sensor 13 im Bereich der Vorschubeinrichtung 4 vorgesehen und realisiert, mit dessen Hilfe die Vorschubgeschwindigkeit des Kabels 1 bestimmt und eingestellt werden kann, sofern die Vorschubeinrichtung 4 zusätzlich mit Hilfe der Steuereinheit 12 beaufschlagt wird, wie dies die Fig. 1 wiedergibt. Darüber hinaus ist ein weiterer Sensor 14 im Bereich der Positioniereinrichtung 10 vorgesehen. Mit Hilfe des Sensors 14 kann die Geschwindigkeit der Luftströmung im Inneren des Rohres 2 erfasst und an die Steuereinheit 12 gemeldet werden. In Abhängigkeit hiervon kann dann die Steuereinheit 12 die Saugeinheit 11 respektive die Einblasvorrichtung 5, 6, 7, 8, 9 bzw. den Lufterzeuger 8 entsprechend ansteuern und beaufschlagen.

Die Funktionsweise ist wie folgt. Ausgehend von der Trommel 3 wird das Kabel 1 zunächst der Vorschubeinrichtung 4 zugeführt. Mit Hilfe der Vorschubeinrichtung 4 wird das Kabel 1 über einen Lufteinlass 5 in der Förderrichtung F in die Einlasseinheit 5, 6 eingeführt. Da die Einlasseinheit 5, 6 mit Hilfe des Lufterzeugers 8 in Gestalt des Kompressors im Beispielfall beaufschlagt wird, herrscht in der Einlasseinheit 5, 6 ein entsprechender Überdruck. Dieser Überdruck bzw. eine entsprechende Luftströmung wird zusammen mit dem Kabel 1 über das Auslassrohr 7 in die Einführöffnung 2a des Rohres 2 abgegeben. Der solchermaßen im Inneren des Rohres 2 erzeugte Überdruck sorgt dafür, dass das Kabel 1 entlang des Rohres 2 in Richtung auf das Rohrende 2b weitertransportiert wird.

Da das Rohr 2 im Ausführungsbeispiel auf der als Wickeltrommel 10 ausgebildeten Positioniereinrichtung 10 wendeiförmig bzw. spiralförmig aufgewickelt ist, wird das Kabel 1 bei diesem Vorgang jeweils an der Innenwandung des Rohres 2 abgelenkt. Die an das Rohrende 2b angeschlossene Saugeinheit 11 sorgt in diesem Zusammenhang dafür, dass der von der Einblasvorrichtung 5, 6, 7, 8, 9 erzeugte Überdruck im Inneren des Rohres 2 abgeführt wird, so dass sich frontseitig vor dem durch das Rohr 2 geführten Kabel 1 nicht eine zusammen mit dem Kabel 1 durch das Rohr 2 hindurchbewegte Luftsäule ausbildet. Dadurch kommt es zu einem reibungsoptimierten Transport des Kabels 1 durch das Rohr 2, und zwar auch unter Berücksichtigung des vom Rohr 2 beschriebenen spiral- bzw. wendeiförmigen Verlaufes.

Das Rohr 2 verfügt in der Regel über einen Außendurchmesser, welcher Werte von typischerweise 5 mm bis 20 mm betragen kann. Der zugehörige Innendurchmesser beträgt dabei 3 mm bis 15 mm. Dabei können je nach Dimensionierung des Rohres 2 Kabel 1 mit einem Durchmesser im Bereich von 1 mm bis 12 mm eingezogen und im Inneren des Rohres 2 transportiert werden. Etwaige an dieser Stelle und an der Innenwand des Rohres 2 vorgesehene und bereits angesprochene Rippen 2c sorgen hier unter Umständen in Verbindung mit zusätzlich auf die Ummantelung des Kabels 1 aufgebrachtem Gleitmittel für eine Reduzierung der Reibung. Dazu mögen die Rippen 2c jeweils über den Umfang äquidistant verteilt angeordnet sein und in Längsrichtung des Rohres 2 verlaufen. Grundsätzlich ist auch ein wellenförmiger Verlauf der Längsrippen 2c über die Länge des Rohres 2 möglich.

## Patentansprüche

1. Verfahren zum Einführen wenigstens eines Kabels (1) in ein Rohr (2), wonach das Kabel (1) mit Hilfe einer Vorschubeinrichtung (4) in eine Einführöffnung (2a) des Rohres (2) eingeschoben und dann entlang des Rohres (2) durch einen seitens einer Einblasvorrichtung (5, 6, 7, 8, 9) im Inneren erzeugten Überdruck in Richtung auf ein Rohrende (2b) weitertransportiert wird,
**dadurch gekennzeichnet, dass**
zusätzlich eine Saugeinheit (11) vorgesehen ist, welche das Innere des Rohres (2) mit einem Unterdruck zur Unterstützung der erzeugten Luftströmung beaufschlagt.

2. Verfahren nach Anspruch 1, **dadurch gekennzeichnet, dass** die Saugeinheit (11) im Bereich des Rohrendes (2b) an das Rohr (2) angeschlossen ist, während die Einblasvorrichtung (5, 6, 7, 8, 9) das Innere des Rohres (2) ausgehend vom Bereich der Einführöffnung (2a) beaufschlagt.

3. Verfahren nach Anspruch 1 oder 2, **dadurch gekennzeichnet, dass** die Saugeinheit (11) und die Einblasvorrichtung (5, 6, 7, 8, 9) hinsichtlich ihrer jeweiligen Luftfördermenge und/oder des erzeugten Druckes jeweils variabel eingestellt werden.

4. Verfahren nach Anspruch 3, **dadurch gekennzeichnet, dass** je nach gewünschter Geschwindigkeit der Luftströmung im Inneren des Rohres (2) die Luftfördermenge und/oder der erzeugte Druck der Saugeinheit (11) und/oder der Einblasvorrichtung (5, 6, 7, 8, 9) eingestellt werden.

5. Verfahren nach einem der Ansprüche 1 bis 4, **dadurch gekennzeichnet, dass** die Geschwindigkeit der Luftströmung in Verbindung mit einem Strömungsquerschnitt (Q) zwischen dem Kabel (1) und einer Innenwand des Rohres (2) sowie die Reibung des Kabels (1) an der Innenwand des Rohres (2) im Wesentlichen eine Vorschubgeschwindigkeit des Kabels (1) im Rohr (2) vorgeben.

6. Verfahren nach einem der Ansprüche 1 bis 5, **dadurch gekennzeichnet, dass** das Rohr (2) bei der Bestückung mit dem Kabel (1) längserstreckt und/oder bogenförmig ausgerichtet wird.

7. Verfahren nach Anspruch 6, **dadurch gekennzeichnet, dass** das Rohr (2) bei der Bestückung mit dem Kabel (1) spiralförmig bzw. wendeiförmig auf einer Trommel (10) aufgewickelt ist.

8. Vorrichtung zum Einführen wenigstens eines Kabels (1) in ein Rohr (2), vorzugsweise zur Durchführung des Verfahrens nach einem der Ansprüche 1 bis 7, mit einer Vorschubeinrichtung (4) zum Einschieben des Kabels (1) in eine Einführöffnung (2a) des Rohres (2), und mit einer Einblasvorrichtung (5, 6, 7, 8, 9) zur Erzeugung eines Überdruckes im Inneren des Rohres (2) und zum Weitertransport des Kabels (1) in Richtung auf ein Rohrende (2b),
**dadurch gekennzeichnet, dass**
zusätzlich eine Saugeinheit (11) vorgesehen ist, welche das Innere des Rohres (2) mit einem Unterdruck zur Unterstützung der erzeugten Luftströmung beaufschlagt.

9. Vorrichtung nach Anspruch 8, **dadurch gekennzeichnet, dass** die Vorschubeinrichtung (4) für das Kabel (1) mit wenigstens einer Rollenanordnung ausgerüstet ist.

10. Vorrichtung nach Anspruch 8 oder 9, **dadurch gekennzeichnet, dass** die Einblasvorrichtung (5, 6, 7, 8, 9) mit einer Einlasseinheit (5, 6) sowie einem Auslassrohr (7) für das Kabel (1) ausgerüstet ist.

11. Vorrichtung nach einem der Ansprüche 8 bis 10, **dadurch gekennzeichnet, dass** die Einblasvorrichtung (5, 6, 7, 8, 9) zusätzlich einen an die Einlasseinheit (5, 6) angeschlossenen Lufterzeuger (8), beispielsweise einen Kompressor (8), aufweist.

12. Vorrichtung nach einem der Ansprüche 8 bis 11, **dadurch gekennzeichnet, dass** eine Positioniereinrichtung (10) für das Rohr (2) vorgesehen ist.

13. Vorrichtung nach Anspruch 12, **dadurch gekennzeichnet, dass** sich die Positioniereinrichtung (10) an die Einblasvorrichtung (5, 6, 7, 8, 9) anschließt.

14. Vorrichtung nach einem der Ansprüche 8 bis 13, **dadurch gekennzeichnet, dass** die Saugeinheit (11) der Positioniereinrichtung (10) folgt.

15. Vorrichtung nach einem der Ansprüche 8 bis 14, **dadurch gekennzeichnet, dass** die Positioniereinrichtung (10) als Wickeltrommel (10) für das Rohr (2) ausgebildet ist.

## Geänderte Patentansprüche

### Geänderte Patentansprüche gemäss Regel 137(2) EPÜ.

1. Verfahren zum Einführen wenigstens eines Kabels (1) in ein Rohr (2), wonach
das Kabel (1) mit Hilfe einer Vorschubeinrichtung (4) in eine Einführöffnung (2a) des Rohres (2) eingeschoben und dann entlang des Rohres (2) durch einen seitens einer Einblasvorrichtung (5, 6, 7, 8, 9) im Inneren erzeugten Überdruck in Richtung auf ein Rohrende (2b) weitertransportiert wird, und wonach zusätzlich eine Saugeinheit (11) vorgesehen ist, welche das Innere des Rohres (2) mit einem Unterdruck zur Unterstützung der erzeugten Luftströmung beaufschlagt,
**dadurch gekennzeichnet, dass**
das Rohr zuvor mithilfe einer Extrusionsvorrichtung in der gewünschten Länge produziert und dann auf einer Trommel (10) aufgewickelt worden ist, sodass
das Rohr (2) bei der Bestückung mit dem Kabel (1) bogenförmig ausgerichtet und mit dem Kabel (1) am Ort der Rohrherstellung bestückt wird.

2. Verfahren nach Anspruch 1, **dadurch gekennzeichnet, dass** die Saugeinheit (11) im Bereich des Rohrendes (2b) an das Rohr (2) angeschlossen ist, während die Einblasvorrichtung (5, 6, 7, 8, 9) das Innere des Rohres (2) ausgehend vom Bereich der Einführöffnung (2a) beaufschlagt.

3. Verfahren nach Anspruch 1 oder 2, **dadurch gekennzeichnet, dass** die Saugeinheit (11) und die Einblasvorrichtung (5, 6, 7, 8, 9) hinsichtlich ihrer jeweiligen Luftfördermenge und/oder des erzeugten Druckes jeweils variabel eingestellt werden.

4. Verfahren nach Anspruch 3, **dadurch gekennzeichnet, dass** je nach gewünschter Geschwindigkeit der Luftströmung im Inneren des Rohres (2) die Luftfördermenge und/oder der erzeugte Druck der Saugeinheit (11) und/oder der Einblasvorrichtung (5, 6, 7, 8, 9) eingestellt werden.

5. Verfahren nach einem der Ansprüche 1 bis 4, **dadurch gekennzeichnet, dass** die Geschwindigkeit der Luftströmung in Verbindung mit einem Strömungsquerschnitt (Q) zwischen dem Kabel (1) und einer Innenwand des Rohres (2) sowie die Reibung des Kabels (1) an der Innenwand des Rohres (2) im Wesentlichen eine Vorschubgeschwindigkeit des Kabels (1) im Rohr (2) vorgeben.

6. Vorrichtung zum Einführen wenigstens eines Kabels (1) in ein Rohr (2), vorzugsweise zur Durchführung des Verfahrens nach einem der Ansprüche 1 bis 5, mit einer Vorschubeinrichtung (4) zum Einschieben des Kabels (1) in eine Einführöffnung (2a) des Rohres (2), und mit einer Einblasvorrichtung (5, 6, 7, 8, 9) zur Erzeugung eines Überdruckes im Inneren des Rohres (2) und zum Weitertransport des Kabels (1) in Richtung auf ein Rohrende (2b), wobei
zusätzlich eine Saugeinheit (11) vorgesehen ist, welche das Innere des Rohres (2) mit einem Unterdruck zur Unterstützung der erzeugten Luftströmung beaufschlagt,
**dadurch gekennzeichnet, dass**
das Rohr (2) zuvor mithilfe einer Extrusionsvorrichtung in der gewünschten Länge produziert und dem auf einer Trommel (10) aufgewickelt worden ist, sodass
das Rohr (2) bei der Bestückung mit dem Kabel (1) bogenförmig ausgerichtet und mit dem Kabel (1) am Ort der Rohrherstellung bestückt wird.

7. Vorrichtung nach Anspruch 6, **dadurch gekennzeichnet, dass** die Vorschubeinrichtung (4) für das Kabel (1) mit wenigstens einer Rollenanordnung ausgerüstet ist.

8. Vorrichtung nach Anspruch 6 oder 7, **dadurch gekennzeichnet, dass** die Einblasvorrichtung (5, 6, 7, 8, 9) mit einer Einlasseinheit (5, 6) sowie einem Auslassrohr (7) für das Kabel (1) ausgerüstet ist.

9. Vorrichtung nach einem der Ansprüche 6 bis 8, **dadurch gekennzeichnet, dass** die Einblasvorrichtung (5, 6, 7, 8, 9) zusätzlich einen an die Einlasseinheit (5, 6) angeschlossenen Lufterzeuger (8), beispielsweise einen Kompressor (8), aufweist.

10. Vorrichtung nach einem der Ansprüche 6 bis 9, **dadurch gekennzeichnet, dass** eine Positioniereinrichtung (10) für das Rohr (2) vorgesehen ist.

11. Vorrichtung nach Anspruch 10, **dadurch gekennzeichnet, dass** sich die Positioniereinrichtung (10) an die Einblasvorrichtung (5, 6, 7, 8, 9) anschließt.

12. Vorrichtung nach einem der Ansprüche 6 bis 11, **dadurch gekennzeichnet, dass** die Saugeinheit (11) der Positioniereinrichtung (10) folgt.

13. Vorrichtung nach einem der Ansprüche 6 bis 12, **dadurch gekennzeichnet, dass** die Positioniereinrichtung (10) als Wickeltrommel (10) für das Rohr (2) ausgebildet ist.
